# EUROPEAN PATENT SPECIFICATION

(11) **EP 4 393 645 B1**
(45) Date of publication and mention of the grant of the patent: **28.01.2026**
(21) Application number: 21916650.1
(22) Date of filing: 14.09.2021
(51) Int. Cl.: B24D 13/14

(54) **GRINDING DISK AND SUBSTRATE CLEANING DEVICE**
SCHLEIFSCHEIBE UND SUBSTRATREINIGUNGSVORRICHTUNG
DISQUE ABRASIF ET DISPOSITIF DE NETTOYAGE DE SUBSTRAT

(30) Priority: 23.08.2021 CN 202110965606
(43) Date of publication of application: 03.07.2024
(73) Proprietor: Wuhan China Star Optoelectronics Semiconductor Display Technology Co., Ltd., Wuhan, Hubei 430079 (CN)
(72) Inventor: MA, Zehao, Wuhan Hubei 430079 (CN); SHEN, Haiyang, Wuhan Hubei 430079 (CN)
(74) Representative: Murgitroyd & Company
(86) International application number: PCT/CN2021/118207
(87) International publication number: WO 2023/024190

(56) References cited:
- CN-A- 1 482 958
- CN-A- 108 161 711
- CN-A- 111 941 155
- CN-A- 111 941 155
- CN-C- 1 209 229
- CN-U- 208 528 802
- JP-A- 2008 290 207
- JP-B2- 5 789 870
- KR-U- 20110 008 979
- US-A1- 2004 266 193

## Description

### FIELD OF INVENTION

The present application relates to a field of display technologies, especially to a grinding disc for cleaning a substrate included by a display device and a substrate cleaning device including the grinding disc.

### BACKGROUND OF INVENTION

Laser lift off (LLO) technology has a wide range of applications because of its simple operation and high practicability, and can effectively separate the substrate and the organic material layer without damaging the substrate. The laser lift off (LLO) technology refers that during manufacturing a flexible display panel, when a hard substrate and a flexible substrate is separated by laser, the laser penetrates the hard substrate and is absorbed by a organic material of a laser active region of the flexible substrate, and a structure of the organic material of the laser active region is damaged by the laser such that the hard substrate and the flexible substrate are separated.

### Technical issue

Pollution or defects are on a glass would affect the laser energy absorption of the flexible substrate under the glass to causes the flexible substrate and the hard substrate on this part to not be peeled off well, which causes damage to the flexible substrate and forms a defective product. Therefore, grinding and cleaning effect is before performing laser lift off to a substrate is very important. As discovered by research, a grinding and cleaning area is influenced seriously by a degree of parallel between a grinding disc and a product. Usually, under a circumstance of the degree of parallel between a grinding disc and a product to be cleaned not qualified, an effective grinding area is only 30%, and long term grinding causes deviation such that adjustment each time spends long time and a stable effect cannot be kept for long time, which influences a production rate. At present, the main solution adopted by mainstream equipment manufacturers is to add automatic optical monitoring at a discharge position of a cleaning machine to control dirt before entering LLO equipment. The dirt exceeding the specification will be discharged, but this will reduce an input LLO product and seriously affect an utilization rate.

CN111941155A discloses a grinding disc according to the preamble of claim 1 and a polishing pad treatment method for eliminating grinding marks on glass surfaces. First, the polishing disk is fixed below the polishing disk bracket. Then, a high-density sponge layer with a thickness of 5-10 mm is adhered to the non-polishing surface of the polishing pad. The density of the high-density sponge layer is 0.3 g/cm³ ± 0.08, and the water absorption rate is less than 20% ± 10. Next, the high-density sponge layer is adhered to the bottom surface of the polishing disk, with the polishing surface of the polishing pad facing downward. The polishing disk drives the polishing pad to rotate and press down onto the surface of the glass to be polished. The high-density sponge layer serves as a buffer layer, gradually releasing the downward pressure during the pressing process of the polishing pad. This method optimizes the polishing pad, enabling it to mitigate polishing defects caused by the impact of the polishing pad on the glass surface during the pressing down and startup process of the polishing head, thereby improving the polishing effect.

KR20110008979U discloses a polishing disk pad that can be easily attached to a polishing device using magnetic force. The polishing disk pad according to this utility model has a polishing layer formed at the lowermost part, an attachment layer formed at the uppermost part to allow attachment to the polishing device, and a buffer layer provided between the polishing layer and the attachment layer. A polishing disk pad is attached to the polishing device, rotates, and cleans and polishes the surface of a flat panel display panel. The attachment layer is characterized by including a magnetic material so that it can be attached to the polishing device by magnetic force. As a result, the polishing disk pad can be easily attached to the polishing device, scratches on the surface of the flat panel display panel caused by foreign substances during the polishing process can be prevented, and the flat panel display panel can be precisely cleaned and polished.

JP5789870B2 discloses an auxiliary plate for a polishing pad that can realize a novel anti-impregnation structure capable of preventing impregnation of slurry into the cushion layer of the polishing pad with high durability and reliability. With respect to the auxiliary plate body that is made detachable from the rotating platen, the polishing pad, which has a cushion layer provided on the back side of the polishing layer, is superimposed and fixed onto the surface of the pad mounting recess provided in the central portion of the upper surface of the auxiliary plate body. Additionally, an outer peripheral anti-impregnation means that covers the outer peripheral surface of the cushion layer to prevent impregnation of slurry into the cushion layer is formed by the auxiliary plate body. Furthermore, sealing materials and are provided to seal the upper opening portion of the gap between the inner surface of the peripheral wall of the pad mounting recess and the radially opposing surface of the cushion layer.

US2004/266193A1 discloses an electrochemical mechanical process for electroplating or electropolishing a conductive surface of a wafer is provided. The conductive surface of the wafer is touched by a polishing surface of a compressible pad while a process solution flows through the pad and a potential difference is maintained between the conductive surface and an electrode. The pressure between the polishing surface and a central region of the conductive surface is increased by applying a shaping process to either the conductive surface or the pad.

### SUMMARY OF INVENTION

### Technical solution

To solve the above issue, technical solutions provided by the present application are as follows:

A grinding disc, wherein the grinding disc comprises:
a base layer;
a thickness self-adaptive layer disposed on the base layer, wherein the thickness self-adaptive layer is configured to deform based on pressure; and
a grinding plate disposed on a side of the thickness self-adaptive layer away from the base layer, wherein the grinding plate is adapted for contacting a product to grind and clean the product. A metal pad is disposed between the thickness self-adaptive layer and the grinding plate, a center of the metal pad coincides with a center of the grinding plate and a center of the thickness self-adaptive layer, and a diameter of the metal pad is less than a diameter of the grinding plate. The grinding plate is a magnetic metal material, and the metal pad and the grinding plate are attached and fixed to each other magnetically.

In an embodiment, a thickness range of the thickness self-adaptive layer is 4 to 5 millimeters, and a hardness range of the thickness self-adaptive layer is 30HRC-40HRC.

In an embodiment, a thickness range of the grinding plate is 0.5 to 1 millimeter.

In an embodiment, a ratio of the diameter of the metal pad to the diameter of the grinding plate is between one-fifth to one-fourth.

In an embodiment, a thickness range of the metal pad is 0.2 to 0.3 millimeters.

In an embodiment, a material of the thickness self-adaptive layer is foam or foam pad.

In an embodiment, a water-proof material layer is disposed on a periphery of the thickness self-adaptive layer.

In an embodiment, a flange is disposed on a periphery of the grinding plate, and a height of the flange is less than a thickness of the thickness self-adaptive layer when a deformation amount of the thickness self-adaptive layer is maximum.

The present application also relates to a substrate cleaning device.

A substrate cleaning device comprises a grinding head and the grinding disc as described above, and the grinding disc is connected to the grinding head.

### Advantages

The grinding disc and the substrate cleaning device provided by the present application dispose a thickness self-adaptive layer on an end of a grinding plate away from a grinding surface to make the thickness self-adaptive layer able to deform based on a pressure applied by the grinding disc to a product to be cleaned such that the grinding disc can complete fit a surface of the product to be cleaned to increase a contact area between the grinding plate and the product to be cleaned, which overcomes blind spots of cleaning due to the non-parallel grinding plate and product, improves cleaning effect, and drastically enhances a product rate.

### DESCRIPTION OF DRAWINGS

FIG. 1 is a schematic structural view of a usage scenario of a grinding disc provided by the embodiment of the present application;
FIG. 2 is a schematic cross-sectional view the grinding disc of a first embodiment of the present application, not encompassed by the wording of the claims but considered as useful for understanding the invention.
FIG. 3 is a schematic cross-sectional view of the grinding disc of a second embodiment of the present application;
FIG. 4 is a schematic exploded structural view of the grinding disc in FIG. 3.
FIG. 5 is a schematic cross-sectional view of the grinding disc of a third embodiment of the present application, not encompassed by the wording of the claims but considered as useful for understanding the invention.
FIG. 6 is a schematic cross-sectional view of the grinding disc provided by a fourth embodiment of the present application; and
FIG. 7 is a schematic cross-sectional view of the grinding disc provided by a fifth embodiment of the present application.

### DETAILED DESCRIPTION OF PREFERRED EMBODIMENTS

The technical solution in the embodiment of the present application will be clearly and completely described below with reference to the accompanying drawings in the embodiments of the present application. Apparently, the described embodiments are merely some embodiments of the present application instead of all embodiments.

In the description of the present application, it should be understood that terminologies "longitudinal", "transverse", "length", "width", "thickness", "upper", "lower", "front", "rear", "left", "side", "vertical", "horizontal" for indicating relations of orientation or position are based on orientation or position of the accompanying drawings, are only for the purposes of facilitating description of the present application and simplifying the description instead of indicating or implying that the referred device or element must have a specific orientation or position, must to be structured and operated with the specific orientation or position. Therefore, they should not be understood as limitations to the present application. Furthermore, terminologies "first", "second" are only for the purposes of description, and cannot be understood as indication or implication of comparative importance or a number of technical features. Therefore, a feature limited with "first", "second" can expressly or implicitly include one or more features. In the description of the present application, a meaning of "a plurality of" is two or more, unless there is a clear and specific limitation otherwise.

The present application may repeat reference numerals and/or reference letters in different examples. The repetition is for the purpose of simplification and clarity, and does not by itself indicate the relationship between the various embodiments and/or settings discussed.

The display panel of the present application are described in detail in combination with specific embodiments as follows.

Embodiment 1 - not encompassed by the wording of the claims but considered as useful for understanding the invention.

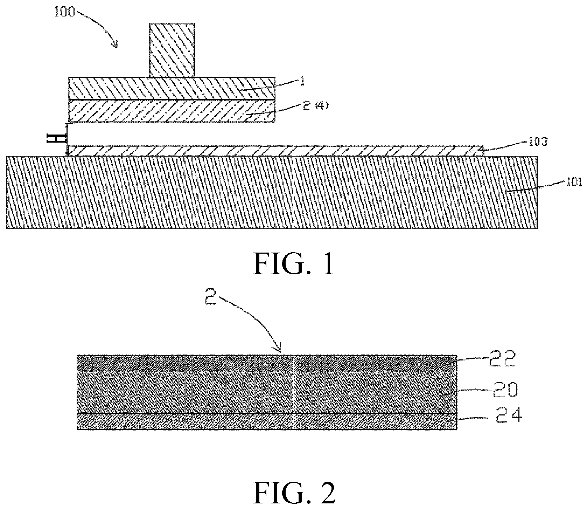

With reference to FIGs. 1 to 2, a substrate cleaning device 100 comprises: a grinding head 1 and a grinding disc 2 disposed at an end of the grinding head 1. The grinding disc 2 comprises a thickness self-adaptive layer 20 and a base layer 22 and a grinding plate 24 that are located on two opposite surfaces of the thickness self-adaptive layer 20. The grinding disc 2 is fixed to the grinding head 1 through the base layer 22. Therefore, a hardness of the base layer 22 is required to be excellent to prevent deformation. The thickness self-adaptive layer 20 has flexibility and can deform based on a pressure applied by the grinding disc 2 to a product to be cleaned 103 such that the grinding disc 2 completely fits a surface of the product to be cleaned 103.

The grinding disc 2 is detachably fixed to the grinding head 1. For example, vacuum attachment, magnetic attachment or double-sided tap adhesion can be adopted. Preferably, vacuum attachment is used for fixing to prevent residue of glue remains when the grinding disc 2 is removed and influence later cleaning effect.

In the present embodiment, thickness and material of the hard material layer has no specific requirement, any materials without deformation can be applied. For example, resin material, metal material, etc.

A thickness of the grinding plate 24 is less than a thickness of the thickness self-adaptive layer 20. An objective of such design is to make the grinding disc 2 to adapt for stretch and retraction variations of the foam. In the present embodiment, a thickness range of the grinding plate 24 is 0.5mm-1mm, and preferably is 0.5 millimeters, which can be adapted for a certain compression deformation of foam.

The grinding plate 24 can be selected from materials of aluminum oxide, cerium oxide, and silicon oxide. In the present embodiment, a material of the grinding plate 24 is aluminum oxide. The grinding plate 24 manufactured by the above can fulfill grinding hardness requirements and prevention of dregs.

In other embodiment, the grinding plate 24 can also be selected from materials of substances with greater hardness and magnetic.

A thickness range of the thickness self-adaptive layer 20 is 4 to 5 millimeters. A hardness range of the thickness self-adaptive layer 20 is 30HRC-40HRC. Preferably, the hardness range of the thickness self-adaptive layer 20 is 35HRC. The thickness self-adaptive layer 20 which is over hard would result in poor scalability to fail to reach self-adaptive requirements, and the thickness self-adaptive layer 20 which is over soft would result in excessive deformation of the grinding plate 24 to wear a carrier stage 101 for carrying a product.

The thickness self-adaptive layer 20 is configured to deform based on pressure, and a material of the thickness self-adaptive layer 20 is foam, a foam pad, or a resilient element formed b a spring. Of course, other structure or material that can deform according to an external force and can restore from deformation after the external force is removed, with hardness of 30 to 40 degrees to achieve a thickness adjustment, can be applied. In the present embodiment, the thickness self-adaptive layer 20 is foam, for example, fiber foam, strip foam, or pure color foam.

In the present embodiment, the grinding plate 24 and the thickness self-adaptive layer 20 are fixed to each other through super glue, and the thickness self-adaptive layer 20 and the base layer 22 are fixed to each other through super glue.

In some of the embodiments, the base layer 22, a diameter of the thickness self-adaptive layer 20 is the same as a diameter of of the grinding plate 24 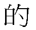 diameter, and the grinding disc 2 is circular or rectangular. In the present embodiment, the grinding disc 2 is circular.

The substrate cleaning device 100 is configured to be disposed on the carrier stage 101. A product to be cleaned 103 with a thickness of 0.7mm can have grinding parameters as follows: A driving end is activated such that a height H of the grinding plate 24 from the carrier stage 101 is about 0.3 millimeters, and then a downward compression amount of the grinding disc 2 (a deformation amount of the thickness self-adaptive layer 20) is 0.2 to 0.4 millimeters, and a pressure of a grinding pneumatic cylinder is 0.16 to 0.2Mpa, a rotation speed of the grinding head is 150 to 250 r/s. After a final check, the grinding disc 2 can completely contact the product and an effective cleaning area of the grinding disc 2 can reach 100%, which drastically enhances a yield rate.

### Embodiment 2

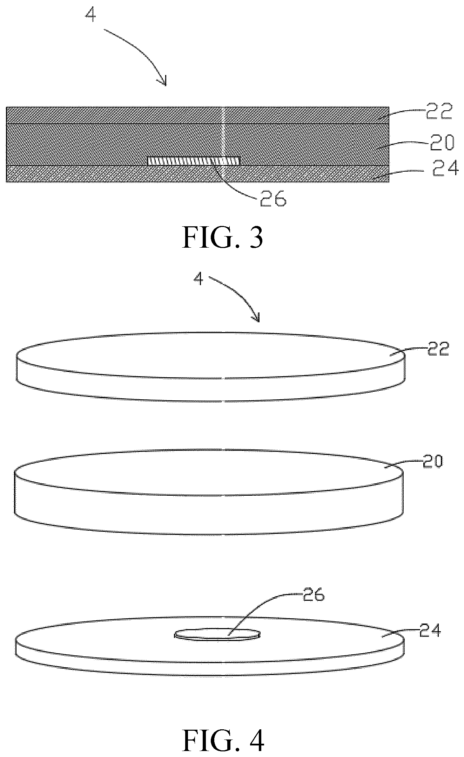

With reference to FIGs. 3 to 4, a structure of the grinding disc 4 provided by FIGs. 3 to 4 is basically the same as a structure of the grinding disc 2 provided by the first embodiment, and a difference of the grinding disc 4 in FIGs. 3 to 4 is that: A metal pad 26 is further disposed between the thickness self-adaptive layer 20 and the grinding plate 24. A center of the metal pad 26 coincides with a center of the grinding plate 24 and a center of the thickness self-adaptive layer 20, and a dimeter of the metal pad 26 is less than a diameter of the grinding plate 24.

An objective of disposing the metal pad 26 is as follows: During a grinding process of a small size product such as a wafer, a size of the grinding disc 2 is larger than a size of the product such that an edge of the grinding plate 24 receives a great force and results in a center of the grinding disc 2 is slightly higher than a periphery of the grinding disc 2 such that a substrate covered by the center portion cannot be completely grinded. Adding a layer of the metal pad 26 between thickness self-adaptive layer 20 and the grinding plate 24 would increase an amount of intervening compression of the grinding disc 2 to enhance cleaning effect.

In the present embodiment, a ratio of the diameter of the metal pad 26 to the diameter of the grinding plate 24 is between one-fifth to one-fourth. A thickness range of the metal pad 26 is 0.2-0.3 millimeters.

For example, In the present embodiment, the diameter of the grinding plate is 13 centimeters, and the diameter of the metal pad is 3 centimeters .

In the present embodiment, the grinding plate 24 is a magnetic metal material, the metal pad 26 and the grinding plate 24 are attached and fixed to each other magnetically. As such, contacting surfaces of the metal pad 26 and the grinding plate 24 completely fit each other. In one hand, the metal pad 26 can be used to reinforced a strength of the grinding plate 24. On the other hand, positions of both can be fixed securely to prevent displacement of the metal pad 26 affecting the cleaning effect.

Embodiment 3 - not encompassed by the wording of the claims but considered as useful for understanding the invention.

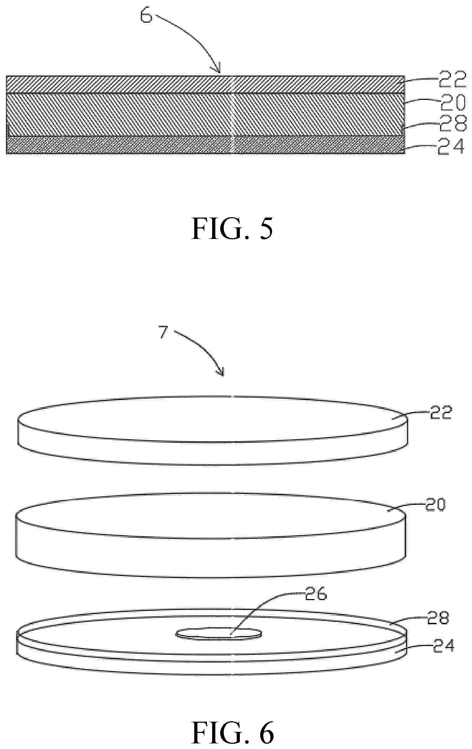

With reference to FIG. 5, a structure of the grinding disc 6 provided by FIG. 5 is basically the same as the structure of the grinding disc 2 provided by the first embodiment, and a difference of the grinding disc 6 in FIG. 5 is that: A flange 28 is formed on a periphery of the grinding plate 24, and a height of the flange 28 is less than the thickness of the thickness self-adaptive layer 20 when a deformation amount of the thickness self-adaptive layer 20 is maximum. The thickness self-adaptive layer 20 is disposed in an accommodation recess formed by the flange 28 and an upper surface of the grinding plate 24. In a preferred embodiment, a height range of the flange 28 is 1.5 to 2.5 millimeters.

An objective of disposing the flange 28 is as follows: Because during the grinding and cleaning process, deionized water is sprayed on a surfacer of the substrate, and the flange 28 is utilized to prevent sewage such as the deionized water from entering the thickness self-adaptive layer 20 from a circumference surface of the thickness self-adaptive layer 20. The height of the flange 28 less than the thickness of the thickness self-adaptive layer 20 when the deformation amount of the thickness self-adaptive layer is maximum, is for not influencing a self-adaptive characteristic of the thickness self-adaptive layer 20 such that the thickness self-adaptive layer 20 can excellently fit the surface of the product to achieve a capability of completely cleaning the surface of the product.

### Embodiment 4

With reference to FIG. 6, a structure of the grinding disc 7 provided by FIG. 6 is basically the same as the structure of the grinding disc 6 provided by FIG. 5, and a difference of the grinding disc 7 in FIG. 6 is as follows: A metal pad 26 is fixed on the grinding plate 24 to increase an amount of intervening compression of the grinding disc 2 and also to increase a contact area between the grinding disc 6 and the product to improve cleaning effect.

### Embodiment 5

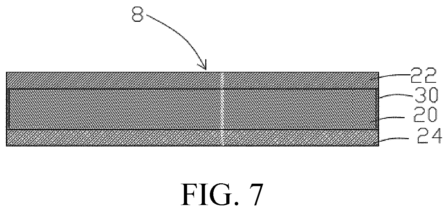

With reference to FIG. 7, a structure of the grinding disc 8 provided by FIG. 7 is basically the same as the structure of the structure of the grinding disc 2 provided by the first embodiment, and a difference of the grinding disc 8 provided by FIG. 7 is as follows: A water-proof coating layer 30 is disposed on a circumference surface of the thickness self-adaptive layer 20, and the water-proof coating layer 30 is used to completely seal a small hole with of the circumference surface of the thickness self-adaptive layer 20.

An objective of disposing the water-proof coating layer 30 is as follows: Because during the grinding and cleaning process, deionized water is sprayed on the surface of the substrate, the water-proof coating layer 30 is utilized to prevent sewage such as deionized water from entering the thickness self-adaptive layer 20 through the circumference surface of the thickness self-adaptive layer 20.

The metal pad 26 is added between the thickness self-adaptive layer 20 and the grinding plate 24.

As described above, advantages of the present application are as follows: The substrate cleaning device 100 provided by the present application disposes a thickness self-adaptive layer 20 on an end of a grinding plate 24 away from a grinding surface to make the thickness self-adaptive layer 20 able to deform based on a pressure applied by the grinding disc 2 to a product to be cleaned 103 such that the grinding disc 2 can complete fit a surface of the product to be cleaned 103 to increase a contact area between the grinding plate 24 and the product to be cleaned 103, which overcomes blind spots of cleaning due to the non-parallel grinding plate 24 and product, improves cleaning effect, and drastically enhances a product rate.

For a condition that the size of the grinding disc 4, 7 is greater than that of the product to be cleaned 103, a layer of the metal pad 26 is added between the thickness self-adaptive layer 20 and the grinding plate 24, which can increase an amount of intervening compression of the grinding disc 4, 7 to enhance cleaning effect.

## Claims

1. A grinding disc (2), comprising:
a base layer (22);
a thickness self-adaptive layer (20) disposed on the base layer (22), wherein the thickness self-adaptive layer (20) is configured to deform based on pressure; and
a grinding plate (24) disposed on a side of the thickness self-adaptive layer (20) away from the base layer (22),
wherein the grinding plate (24) is adapted for contacting a product to grind and clean the product;
**characterized in that** a metal pad (26) is disposed between the thickness self-adaptive layer (20) and the grinding plate (24), a center of the metal pad (26) coincides with a center of the grinding plate (24) and a center of the thickness self-adaptive layer (20), and a diameter of the metal pad (26) is less than a diameter of the grinding plate (24);
wherein the grinding plate (24) is a magnetic metal material, and the metal pad (26) and the grinding plate (24) are attached and fixed to each other magnetically.

2. The grinding disc (2) according to claim 1, wherein a thickness range of the thickness self-adaptive layer (20) is 4 to 5 millimeters, and a hardness range of the thickness self-adaptive layer (20) is 30HRC-40HRC.

3. The grinding disc (2) according to claim 1, wherein a thickness range of the grinding plate (24) is 0.5 to 1 millimeter.

4. The grinding disc (2) according to claim 3, wherein a ratio of the diameter of the metal pad (26) to the diameter of the grinding plate (24) is between one-fifth to one-fourth.

5. The grinding disc (2) according to claim 3, wherein a thickness range of the metal pad (26) is 0.2 to 0.3 millimeters.

6. The grinding disc (2) according to claim 1, wherein a material of the thickness self-adaptive layer (20) is foam or foam pad.

7. The grinding disc (2) according to claim 1, wherein a water-proof material layer is disposed on a periphery of the thickness self-adaptive layer (20).

8. The grinding disc (2) according to claim 1, wherein a flange (28) is disposed on a periphery of the grinding plate (24), and a height of the flange (28) is less than a thickness of the thickness self-adaptive layer (20) when a deformation amount of the thickness self-adaptive layer (20) is maximum.

9. A substrate cleaning device (100) comprising a grinding head (1) and the grinding disc (2) according to claims 1 to 8, wherein the grinding disc (2) is connected to the grinding head (1)

## Patentansprüche

1. Eine Schleifscheibe (2), umfassend:
eine Basisschicht (22);
eine selbstanpassende Schicht (20) mit variabler Dicke, die auf der Basisschicht (22) angeordnet ist,
wobei die selbstanpassende Schicht (20) mit variabler Dicke so konfiguriert ist, dass sie sich unter Druck verformt; und
eine Schleifplatte (24), die auf einer von der Basisschicht (22) abgewandten Seite der selbstanpassenden Schicht (20) angeordnet ist,
wobei die Schleifplatte (24) dazu ausgelegt ist, mit einem Produkt in Kontakt zu kommen, um das Produkt zu schleifen und zu reinigen;
**dadurch gekennzeichnet, dass** ein Metallpolster (26) zwischen der selbstanpassenden Schicht (20) und der Schleifplatte (24) angeordnet ist, wobei ein Mittelpunkt des Metallpolsters (26) mit einem Mittelpunkt der Schleifplatte (24) und einem Mittelpunkt der selbstanpassenden Schicht (20) übereinstimmt, und der Durchmesser des Metallpolsters (26) kleiner ist als der Durchmesser der Schleifplatte (24);
wobei die Schleifplatte (24) aus einem magnetischen Metallmaterial besteht und das Metallpolster (26) und die Schleifplatte (24) magnetisch aneinander befestigt und fixiert sind.

2. Schleifscheibe (2) nach Anspruch 1, wobei der Dickenbereich der selbstanpassenden Schicht (20) 4 bis 5 Millimeter beträgt und der Härtebereich der selbstanpassenden Schicht (20) 30 HRC bis 40 HRC beträgt.

3. Schleifscheibe (2) nach Anspruch 1, wobei der Dickenbereich der Schleifplatte (24) 0,5 bis 1 Millimeter beträgt.

4. Schleifscheibe (2) nach Anspruch 3, wobei das Verhältnis des Durchmessers des Metallpolsters (26) zum Durchmesser der Schleifplatte (24) zwischen einem Fünftel und einem Viertel liegt.

5. Schleifscheibe (2) nach Anspruch 3, wobei der Dickenbereich des Metallpolsters (26) 0,2 bis 0,3 Millimeter beträgt.

6. Schleifscheibe (2) nach Anspruch 1, wobei das Material der selbstanpassenden Schicht (20) mit variabler Dicke Schaumstoff oder ein Schaumstoffpolster ist.

7. Schleifscheibe (2) nach Anspruch 1, wobei eine wasserdichte Materialschicht an einem Umfang der selbstanpassenden Schicht (20) mit variabler Dicke angeordnet ist.

8. Schleifscheibe (2) nach Anspruch 1, wobei ein Flansch (28) an einem Umfang der Schleifplatte (24) angeordnet ist und eine Höhe des Flansches (28) geringer ist als eine Dicke der selbstanpassenden Schicht (20), wenn ein Verformungsbetrag der selbstanpassenden Schicht (20) maximal ist.

9. Substratreinigungsvorrichtung (100) mit einem Schleifkopf (1) und der Schleifscheibe (2) gemäß den Ansprüchen 1 bis 8, wobei die Schleifscheibe (2) mit dem Schleifkopf (1) verbunden ist.

## Revendications

1. Disque abrasif (2), comprenant :
une couche de base (22) ;
une couche auto-adaptative en épaisseur (20) disposée sur la couche de base (22),
dans lequel la couche auto-adaptative en épaisseur (20) est configurée pour se déformer en fonction de la pression ; et
une plaque abrasive (24) disposée sur un côté de la couche auto-adaptative en épaisseur (20) éloigné de la couche de base (22),
dans laquelle la plaque abrasive (24) est adaptée pour entrer en contact avec un produit afin de le meuler et de le nettoyer ;
**caractérisé en ce qu'**un tampon métallique (26) est disposé entre la couche auto-adaptative en épaisseur (20) et la plaque abrasive (24), le centre du tampon métallique (26) coïncidant avec le centre de la plaque abrasive (24) et le centre de la couche auto-adaptative en épaisseur (20), et le diamètre du tampon métallique (26) est inférieur au diamètre de la plaque abrasive (24) ;
dans lequel la plaque abrasive (24) est constituée d'un matériau métallique magnétique, et le tampon métallique (26) et la plaque abrasive (24) sont fixés et maintenus ensemble par attraction magnétique.

2. Disque abrasif (2) selon la revendication 1, dans lequel la plage d'épaisseur de la couche auto-adaptative en épaisseur (20) est comprise entre 4 et 5 millimètres, et la plage de dureté de la couche auto-adaptative en épaisseur (20) est comprise entre 30 HRC et 40 HRC.

3. Disque abrasif (2) selon la revendication 1, dans lequel la plage d'épaisseur de la plaque abrasive (24) est comprise entre 0,5 et 1 millimètre.

4. Disque abrasif (2) selon la revendication 3, dans lequel le rapport entre le diamètre du tampon métallique (26) et le diamètre de la plaque abrasive (24) est compris entre un cinquième et un quart.

5. Disque abrasif (2) selon la revendication 3, dans lequel l'épaisseur du tampon métallique (26) est comprise entre 0,2 et 0,3 millimètre.

6. Disque abrasif (2) selon la revendication 1, dans lequel le matériau de la couche auto-adaptative en épaisseur (20) est de la mousse ou un coussinet en mousse.

7. Disque abrasif (2) selon la revendication 1, dans lequel une couche de matériau impermé able est disposée sur la périphérie de la couche auto-adaptative en épaisseur (20).

8. Disque abrasif (2) selon la revendication 1, dans lequel une bride (28) est disposée sur une périphérie de la plaque abrasive (24), et une hauteur de la bride (28) est inférieure à une épaisseur de la couche auto-adaptative en épaisseur (20) lorsque la quantité de déformation de la couche auto-adaptative en épaisseur (20) est maximale.

9. Dispositif de nettoyage de substrat (100) comprenant une tête de meulage (1) et le disque abrasif (2) selon les revendications 1 à 8, dans lequel le disque abrasif (2) est relié à la tête de meulage (1).
